# EUROPEAN PATENT APPLICATION

(11) **EP 4 654 297 A1**
(43) Date of publication of application: **26.11.2025**
(21) Application number: 25175454.5
(22) Date of filing: 09.05.2025
(51) Int. Cl.: H01M 4/36, H01M 4/133, H01M 4/587, H01M 4/62, H01M 10/0562, H01M 4/02, H01M 10/0525

(54) **NEGATIVE ELECTRODE COATING LAYER AND ALL-SOLID-STATE BATTERY INCLUDING THE SAME**

(30) Priority: 09.05.2024 KR 20240061246
(71) Applicant: SAMSUNG SDI CO., LTD., Yongin-si, Gyeonggi-do 17084 (KR)
(72) Inventor: PARK, Young Woo, 17084 Yongin-si, Gyeonggi-do (KR); SONG, Jaejun, 17084 Yongin-si, Gyeonggi-do (KR); CHOI, Jeongeun, 17084 Yongin-si, Gyeonggi-do (KR); CHOI, Youngjin, 17084 Yongin-si, Gyeonggi-do (KR); PARK, Eunhae, 17084 Yongin-si, Gyeonggi-do (KR); HEO, Ryunmin, 17084 Yongin-si, Gyeonggi-do (KR); KANG, Kyunghee, 17084 Yongin-si, Gyeonggi-do (KR); SHIN, DongIl, 17084 Yongin-si, Gyeonggi-do (KR)
(74) Representative: Gulde & Partner

(57) **Abstract**

Provided are a negative electrode coating layer and an all-solid-state battery including the same, and, for example, a negative electrode coating layer for an all-solid-state battery, including a metal-carbon composite in which a metal and a carbon-based material are chemically bonded through sulfur, wherein a content of sulfur is 1,000 ppm to 10,000 ppm, and a root mean square roughness (Sq) of one surface is 0.6 µm or less.

## Description

### BACKGROUND

Embodiments of the present disclosure herein relate to a negative electrode coating layer and an all-solid-state battery including the same.

Lately, extensive efforts to develop batteries having high energy density and enhanced safety have been made in response to industrial demand. For example, lithium ion batteries have been put to practical use in automobiles, as well as information related appliances and communication devices. In the field of automobiles, safety is particularly stressed because failures may be problematic.

All-solid-state batteries replacing an electrolyte solution with a solid electrolyte are now being suggested. The all-solid-state batteries use no combustible organic dispersion medium, and may thus have significantly reduced chances of causing fires or explosions even if short circuits take place. Therefore, such all-solid batteries provide far greater safety than lithium ion batteries using electrolyte solutions.

### SUMMARY

The invention is defined by the appended claims. The description that follows is subjected to this limitation. Any disclosure lying outside the scope of said claims is only intended for illustrative as well as comparative purposes.

Embodiments of the present disclosure provide a negative electrode coating layer having a uniform (or substantially uniform) thickness.

Embodiments of the present disclosure also provide an all-solid-state battery having improved lifetime characteristics.

An embodiment of the present disclosure provides a negative electrode coating layer including a metal-carbon composite in which a metal and a carbon-based material are chemically bonded through sulfur, wherein a content of sulfur is 1,000 ppm to 10,000 ppm, and a root mean square roughness (Sq) of one surface is 0.6 µm or less.

In an embodiment of the present disclosure, a negative electrode coating layer includes a metal-carbon composite in which a metal and a carbon-based material are chemically bonded through sulfur, wherein a content of sulfur is 1,000 ppm to 10,000 ppm, one surface includes a protrusion portion having a diameter of 20 µm or less, and the number of protrusion portions per unit area (e.g., per 100 µm²) of the one surface is greater than 0 and 2 or less.

In an embodiment of the present disclosure, an all-solid-state battery includes a positive electrode, a negative electrode, and a solid electrolyte layer between the positive electrode and the negative electrode, wherein the negative electrode layer includes a negative electrode current collector and a negative electrode coating layer, the negative electrode coating layer includes a metal-carbon composite in which a metal and a carbon-based material are chemically bonded through sulfur, a content of sulfur is 1,000 ppm to 10,000 ppm, a root mean square roughness (Sq) of one surface is 0.6 µm or less, and the one surface is in contact with the solid electrolyte layer.

In an embodiment of the present disclosure, an all-solid-state battery includes a positive electrode, a negative electrode, and a solid electrolyte layer between the positive electrode and the negative electrode, wherein the negative electrode layer includes a negative electrode current collector and a negative electrode coating layer, the negative electrode coating layer includes a metal-carbon composite in which a metal and a carbon-based material are chemically bonded through sulfur, a content of sulfur is 1,000 ppm to 10,000 ppm, one surface includes a protrusion portion having a diameter of 20 µm or less, the number of protrusion portions per unit area (e.g., per 100 µm²) of the one surface is greater than 0 and 2 or less, and the solid electrolyte layer includes a recess portion in contact (e.g., physical contact) with the protrusion portion.

### BRIEF DESCRIPTION OF THE DRAWINGS

The accompanying drawings are included to provide a further understanding of the subject matter of the present disclosure, and are incorporated in and constitute a part of this specification. The drawings illustrate embodiments of the present disclosure and, together with the description, serve to explain principles of the subject matter of the present disclosure. In the drawings:
FIG. 1 is a cross-sectional view showing a cell according to an embodiment of the present disclosure;
FIG. 2 is a perspective view showing a negative electrode layer according to embodiments of the present disclosure;
FIG. 3 is an enlarged view showing region M of a negative electrode coating layer in FIG. 2;
FIG. 4 is a cross-sectional view showing region N of a negative electrode coating layer in FIG. 2;
FIG. 5 is a plan view showing region N of a negative electrode coating layer in FIG. 2;
FIG. 6 is a plan view showing region N of a negative electrode coating layer according to Comparative Examples of the present disclosure;
FIG. 7 is a set of images showing the results of transmission electron microscopy (TEM) on a metal-carbon composite according to Example 1 of the present disclosure;
FIG. 8 is a set of images showing the results of transmission electron microscopy (TEM) and energy dispersive X-ray spectroscopy (EDS) on a metal-carbon composite according to Example 1 of the present disclosure;
FIG. 9 is an image showing the results of an optical microscope on a negative electrode coating layer containing a metal-carbon composite according to Example 1 of the present disclosure;
FIG. 10 is an image showing the results of an optical microscope on a negative electrode coating layer containing a metal-carbon composite according to Comparative Example 1 of the present disclosure;
FIG. 11 is an image showing the results of an optical microscope on a negative electrode coating layer containing a metal-carbon composite according to Comparative Example 2 of the present disclosure;
FIG. 12 is an image showing the results of an optical microscope on a negative electrode coating layer containing a metal-carbon composite according to Comparative Example 3 of the present disclosure; and
FIG. 13 is an image showing analysis of roughness on a negative electrode coating layer containing a metal-carbon composite according to Example 1 of the present disclosure.

### DETAILED DESCRIPTION

In order to sufficiently understand the configuration and effects of the subject matter of the present disclosure, example embodiments of the present disclosure will be described with reference to the accompanying drawings. It should be noted, however, that the present disclosure is not limited to the following embodiments, and may be implemented in various suitable forms and variously modified. The embodiments herein are provided so that present disclosure will be thorough and complete and will fully convey the scope of the present disclosure to those having ordinary skill in the art.

Herein, it will be understood that if a component is referred to as being on another component, the component may be directly on another component, or an intervening third component may be present. In the drawings, thicknesses of components may be exaggerated to effectively describe technical contents of the present disclosure. Like reference numerals refer to like elements throughout.

The embodiments described herein will be explained with reference to the cross-sectional views and/or plan views, which may be idealized example views of the present disclosure. In the drawing, the thicknesses of films and regions may be exaggerated for effective description of the technical contents of the present disclosure. Thus, regions presented as an example in the drawings have general properties, and shapes of the exemplified areas may be used to illustrate a set or specific shape of a device region. Therefore, this should not be construed as limiting to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof.

Terms used herein are not for limiting the present disclosure but for describing the embodiments. As used herein, the singular forms include the plural forms as well, unless the context clearly indicates otherwise. The meaning of "comprises" and/or "comprising" used herein does not exclude the presence or addition of one or more other components besides a mentioned component.

As used herein, the term "combination thereof" may refer to a mixture, a stack, a composite, a copolymer, an alloy, a blend, or a reaction product.

Unless otherwise defined herein, a particle diameter is an average particle diameter. A particle diameter is defined as an average particle diameter (D50) indicating the diameter of particles at a cumulative volume of 50 vol% in particle size distribution. The average particle diameter (D50) may be measured by any suitable method generally used in the art, for example, by a particle size analyzer, an image of transmission electron microscope (TEM), and/or an image of scanning electron microscope (SEM). In embodiments, the average particle diameter (D50) may be measured by a measurement device using dynamic light-scattering, wherein data analysis is conducted to count the number of particles for each particle size range, and an average particle diameter (D50) value may then be obtained through calculation. In embodiments, a laser scattering method may be utilized to measure the average particle diameter. In the measuring using the laser diffraction method, for example, target particles are dispersed in a dispersion medium, introduced into a commercially available laser diffraction particle diameter measuring device (e.g., MT 3000 available from Microtrac, Ltd.), irradiated with ultrasonic waves of 28 kHz at a power of 60 W, and then an average particle diameter (D50) based on 50% of the particle diameter distribution in the measuring device may be calculated.

Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, and/or the like may be used herein to describe certain elements, these elements should not be limited by these terms. These terms are only used to distinguish one element from another element. Thus, a first element could be termed a second element without departing from the teachings of the present disclosure. Similarly, a second element could be termed a first element.

As used herein, expressions such as "at least one of," "one of," "at least one selected from among," and "selected from among," if preceding a list of elements, modify the entire list of elements and do not modify the individual elements of the list. As utilized herein, the expressions "at least one of A, B, or C", "one of A, B, C, or a combination thereof" and "one of A, B, C, and a combination thereof" refer to each component and a combination thereof (e.g., A; B; A and B; A and C; B and C; or A, B, and C). For example, "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items. The symbol "/" used herein may be interpreted as "and" or as "or" according to the context.

As used herein, it is to be understood that the terms such as "including," "includes," "include," "having," "has," "have," "comprises," "comprise," and/or "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The term "combination thereof" may include a mixture, a laminate, a complex, a copolymer, an alloy, a blend, a reactant of constituents.

As used herein, singular forms such as "a," "an," and "the" are intended to include the plural forms as well, unless the context clearly indicates otherwise.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more" or "some" "embodiments of the present disclosure," each including a corresponding listed item.

In this context, "consisting essentially of" means that any additional components will not materially affect the chemical, physical, optical or electrical properties of the semiconductor film.

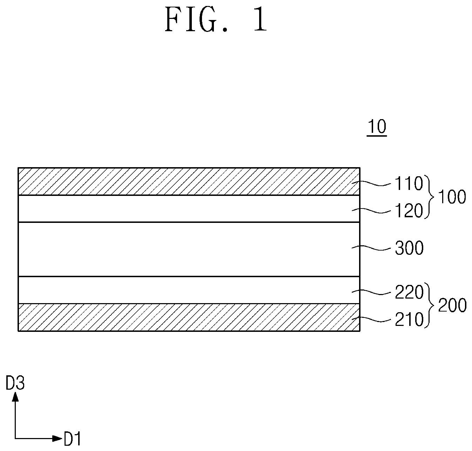

FIG. 1 is a cross-sectional view showing an all-solid-state battery 10 according to an embodiment of the present disclosure.

Referring to FIG. 1, the all-solid-state battery 10 according to an embodiment includes a positive electrode layer 100, a negative electrode layer 200 facing the positive electrode layer 100, and a solid electrolyte layer 300 between the positive electrode layer 100 and the negative electrode layer 200. However, embodiments are not limited thereto, the all-solid-state battery 10 may further include an additional functional layer between the positive electrode layer 100 and the solid electrolyte layer 300 or between the negative electrode layer 200 and the solid electrolyte layer 300, such as an adhesion enhancing layer.

The positive electrode layer 100 of an embodiment includes a positive electrode current collector 110 and a positive electrode active material layer 120 on the positive electrode current collector 110. The positive electrode active material layer 120 may include a positive electrode active material, a solid electrolyte, a conductive material (e.g., an electrically conductive material), and a binder.

The positive electrode current collector 110 may provide a reference surface on which the positive electrode active material layer 120 is provided. The positive electrode current collector 110 may include, for example, a plate and/or a foil that contains indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof.

Unlike what is shown in FIG. 1, the positive electrode current collector 110 may not be provided in an embodiment of the present disclosure. In embodiments, a carbon layer having a thickness of about 0.1 µm to about 4 µm may be further between the positive electrode current collector 110 and the positive electrode active material layer 120 to increase binding strength between the positive electrode current collector 110 and the positive electrode active material layer 120.

The positive electrode active material is a material capable of reversibly absorbing and desorbing lithium ions (e.g., intercalating and deintercalating lithium ions). The positive electrode active material may include, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganate (NCM), lithium manganate, and/or lithium iron phosphate; nickel sulfide; copper sulfide; lithium sulfide; iron oxide; and/or vanadium oxide, but embodiments are not limited thereto. The positive electrode active material may be used alone or may be a mixture of two or more types (or kinds).

The lithium transition metal oxide is, for example, a compound represented by any one selected from among LiₐA_{1-b}B_{b}D₂ (0.90≤a≤1, 0≤b≤0.5), LiₐE_{1-b}B_{b}O_{2-c}D_{c} (0.90≤a≤1, 0≤b≤0.5, 0≤c≤0.05), LiE_{2-b}B_{b}O_{4-c}D_{c} (0≤b≤0.5, 0≤c≤0.05), LiₐNi_{1-b-c}Co_{b}B_{c}D_{α} (0.90≤a≤1, 0≤b≤0.5, 0≤c≤0.05, 0<α<2), LiₐNi_{1-b-c}Co_{b}B_{c}O_{2-α}F_{α} (0.90≤a≤1, 0≤b≤0.5, 0≤c≤0.05, 0<α<2), LiₐNi_{1-b-c}Mn_{b}B_{c}O_{α} (0.90≤a≤1, 0≤b≤0.5, 0≤c≤0.05, 0<α≤2), LiₐNi_{1-b-c}Mn_{b}B_{c}O_{2-α}F_{α} (0.90≤a≤1, 0≤b≤0.5, 0≤c≤0.05, 0<α<2), LiₐNi_{b}E_{c}G_{d}O₂ (0.90≤a≤1, 0≤b≤0.9, 0≤c≤0.5, 0.001≤d≤0.1), LiₐNi_{b}Co_{c}Mn_{d}GₑO₂ (0.90≤a≤1, 0≤b≤0.9, 0≤c≤0.5, 0≤d≤0.5, 0.001≤e≤0.1), LiₐNiG_{b}O₂ (0.9≤a≤1, 0.001≤b≤0.1), LiₐCoG_{b}O₂ (0.90≤a≤1, 0.001≤b≤0.1), LiₐMnG_{b}O₂ (0.90≤a≤1, 0.001≤b≤0.1), LiₐMn₂GbO₄ (0.90≤a≤1, 0.001≤b≤0.1), QO₂, QS₂, LiQS₂, V₂O₅, LiV₂O₅, LiIO₂, LiNiVO₄, Li_{3-f}J₂(PO₄)₃ (0≤f≤2), Li_{3-f}Fe₂(PO₄)₃ (0≤f≤2), and LiFePO₄. In the compound, capital "A" is nickel (Ni), cobalt (Co), manganese (Mn), or a combination thereof; capital "B" is aluminum (Al), nickel (Ni), cobalt (Co), manganese (Mn), chromium (Cr), iron (Fe), magnesium (Mg), strontium (Sr), vanadium (V), a rare earth element, or a combination thereof; capital "D" is oxygen (O), fluorine (F), sulfur (S), phosphorus (P), or a combination thereof; capital "E" is cobalt (Co), manganese (Mn), or a combination thereof; capital "F" is fluorine (F), sulfur (S), phosphorus (P), or a combination thereof; capital "G" is (Al), chromium (Cr), manganese (Mn), iron (Fe), magnesium (Mg), lanthanum (La), cerium (Ce), strontium (Sr), vanadium (V), or a combination thereof; capital "Q" is titanium (Ti), molybdenum (Mo), manganese (Mn), or a combination thereof; capital "I" is chromium (Cr), vanadium (V), iron (Fe), scandium (Sc), yttrium (Y), or a combination thereof; and capital "J" is vanadium (V), chromium (Cr), manganese (Mn), cobalt (Co), nickel (Ni), copper (Cu), or a combination thereof.

The positive electrode active material may include, for example, a lithium salt of the transition metal oxide that has a layered rock salt type (or kind) of structure among the examples of the lithium transition metal oxide. For example, the "layered rock salt type (or kind) of structure" indicates a structure in which oxygen atomic layers and metal atomic layers are alternately arranged regularly in a <111> direction of a cubic rock salt type (or kind) of structure, and as a result, each atomic layer forms a two-dimensional plane. The "cubic rock salt type (or kind) of structure" indicates a sodium chloride (NaCl) type (or kind) of structure, which is one type (or kind) of crystal structures, and, for example, a structure in which face centered cubic (fcc) lattices formed by respective anions and cations are misaligned with respect to each other by ½ of the ridge of a unit lattice. The lithium transition metal oxide having this layered rock salt type (or kind) of structure may be a ternary lithium transition metal oxide, such as LiNiₓCo_{y}Al_{z}O₂ (NCA) or LiNiₓCo_{y}Mn_{z}O₂ (NCM) (0<x<1,0<y<1, 0<z<1, x+y+z=1). If the positive electrode active material includes a ternary lithium transition metal oxide having a layered rock salt type (or kind) of structure, the all-solid-state battery 10 may have greater energy density and improved thermal stability.

The above-described compounds included in the positive electrode active material may be covered by a coating layer. The positive electrode active material may also be used as a mixture of the above-described compounds and a compound to which a coating layer is added. In embodiments, the coating layer added to a surface of the positive electrode active material may include, for example, oxide, hydroxide, oxyhydroxide, oxycarbonate, and/or hydroxycarbonate of the following coating elements. The compounds forming this coating layer may be amorphous and/or crystalline. The coating elements included in the coating layer may be Mg, Al, Co, K, Na, Ca, Si, Ti, V, Sn, Ge, Ga, B, As, Zr, or a mixture thereof. The coating layer may include, for example, Li₂O-ZrO₂ (LZO). The coating layer may be formed using any suitable method that does not adversely affect the physical properties of the positive electrode active material. For example, the coating layer may be formed using a spray coating method and/or a dipping method.

If the positive electrode active material includes nickel (Ni) as a ternary lithium transition metal oxide such as NCA and/or NCM, the capacity density of the all-solid-state battery 10 increases, and thus, the metal elution of the positive electrode active material may be reduced in a charged state. Consequently, the all-solid-state battery 10 may have improved cycle characteristics in a charged state. In embodiments, the "cycle characteristics" are characteristics that indicate the degree to which the all-solid-state battery 10 is deteriorated due to charging/discharging of the all-solid-state battery 10, and in an all-solid-state battery 10 having high cycle characteristics, the degree of deterioration caused by charging/discharging may be insignificant, and in an all-solid-state battery 10 having low cycle characteristics, the degree of deterioration caused by charging/discharging may be significant.

The shape of the positive electrode active material may include, for example, particle shapes such as spheres and/or ellipsoids. The particle size and content of the positive electrode active material are not particularly limited.

The solid electrolyte may include a sulfide-based solid electrolyte having excellent lithium ion conductivity characteristics. The sulfide-based solid electrolyte may include, for example, at least one selected from among Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and capital "Z" is one selected from among Ge, Zn, and/or Ga), Li₂S-GeS₂, Li₂S-SiS₂-Li₃PO₄, Li₂S-SiS₂-LiₚMO_{q} (where p and q are positive numbers, and "M" is one selected from among P, Si, Ge, B, Al, Ga, and/or In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

The sulfide-based solid electrolyte may be an argyrodite-type compound containing at least one selected from among, for example, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In embodiments, the sulfide-based solid electrolyte may be an argyrodite-type compound containing at least one selected from among, for example, Li₆PS₅Cl, LisPSsBr, and Li₆PS₅I.

In embodiments, the sulfide-based solid electrolyte may be an argyrodite-type compound containing Li₇₋ₐMₐPS_{6-c}X_{c} (0≤a≤2, 0≤c≤2). In embodiments, X may be F, Br, Cl, or a combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), or a combination thereof.

The argyrodite-type solid electrolyte may have a density of about 1.5 g/cc to about 2.0 g/cc. The argyrodite-type solid electrolyte, if having a density of about 1.5 g/cc or greater, may allow all-solid-state batteries to have reduced internal resistance (e.g., reduced internal electrical resistance) and prevent solid electrolyte membranes from showing defects such as penetration and short-circuits caused by formation of lithium dendrites (or reduce a likelihood or occurrence of such defects). The solid electrolyte may have an elastic modulus of, for example, about 15 GPa to about 35 GPa.

The solid electrolyte included in the positive electrode active material layer 120 may have a smaller average (median) particle size (D50) than the solid electrolyte included in the solid electrolyte layer 300. For example, the average (median) particle size (D50) of the solid electrolyte included in the positive electrode active material layer 120 may be 90% or less, 80% or less, 70% or less, 60% or less, 50% or less, 40% or less, 30% or less, or 20% or less of the average (median) particle size (D50) of the solid electrolyte included in the solid electrolyte layer 300. In embodiments, the average (median) particle size (D50) may be a median diameter measured using a laser particle size distribution meter.

The positive electrode active material layer 120 may include a conductive material (e.g., an electrically conductive material). The conductive material has conductivity (e.g., electrical conductivity) without causing chemical changes in the all-solid-state battery 10 (or substantially without causing undesirable chemical changes in the all-solid-state battery 10), and may thus increase the conductivity (e.g., electrical conductivity) of the positive electrode active material and the solid electrolyte. The conductive material may include a carbon-based material. The conductive material may include, for example, at least one selected from among graphite, carbon black, acetylene black, carbon nanofibers, and carbon nanotubes.

The positive electrode active material layer 120 may further include a binder. The binder may bond the positive electrode active material, the solid electrolyte, and the conductive material contained in the positive electrode active material layer 120, and may include a material designed to improve bonding strength with the positive electrode current collector 110. The binder may include, for example, polyvinylidene fluoride, styrene butadiene rubber (SBR), polytetrafluoroethylene, polyvinylidenefluoride, vinylidene fluoride/hexafluoropropylene copolymer, polyacrylonitrile, and/or polymethyl methacrylate.

With respect to 100 parts by weight of the positive electrode active material, the solid electrolyte, the conductive material, and the binder, the positive electrode active material layer 120 may include the positive electrode active material in an amount of 85 parts by weight to 92 parts by weight. With respect to 100 parts by weight of the positive electrode active material, the solid electrolyte, the conductive material, and the binder, the positive electrode active material layer 120 may include the bonder in an amount of 0.5 parts by weight to 1.5 parts by weight.

With respect to 100 parts by weight of the solid electrolyte, the positive electrode active material layer 120 may include the conductive material in an amount of 1 part by weight to 50 parts by weight. If the conductive material is included in the positive electrode active material layer 120 in an amount of less than 1 part by weight with respect to 100 parts by weight of the solid electrolyte, the proportion of the conductive material goes down and thus the positive electrode active material layer 120 may have reduced electrical conductivity. If the conductive material is included in the positive electrode active material layer 120 in an amount greater than 50 parts by weight with respect to 100 parts by weight of the solid electrolyte, the proportion of the conductive material goes too high, and thus a coating layer covering a surface of the solid electrolyte may not be properly formed.

The positive electrode active material layer 120 may further include additives such as a filler, a coating agent, a dispersant, and an ion conducting agent in addition to the positive electrode active material, the solid electrolyte, the conductive material, and the binder described above.

The solid electrolyte layer 300 is between the positive electrode layer 100 and the negative electrode layer 200 and includes a sulfide-based solid electrolyte having excellent lithium ion conductivity characteristics. The solid electrolyte included in the solid electrolyte layer 300 may be the same as or different from any one of the materials that may be included in the solid electrolyte included in the positive electrode active material layer 120 described above.

The solid electrolyte layer 300 of an embodiment may include a sulfide-based solid electrolyte. The sulfide-based solid electrolyte may be prepared by subjecting starting materials (e.g., Li₂S, P₂S₅) to melt-quenching and/or mechanical milling. In embodiments, subsequently, the resulting product may be heat-treated. The solid electrolyte may be amorphous, crystalline, or a mixture thereof. In embodiments, the solid electrolyte may include at least sulfur (S), phosphorus (P), and lithium (Li), as component elements among the sulfide-based solid electrolyte materials described above. For example, the solid electrolyte may be a material containing Li₂S-P₂S₅. If the material containing Li₂S-P₂S₅ is used as a sulfide-based solid electrolyte material that forms the solid electrolyte, a mixing molar ratio of Li₂S and P₂S₅ (Li₂S : P₂S₅) is, for example, in a range of 50:50 to 90:10.

The sulfide-based solid electrolyte may be an argyrodite-type compound containing at least one selected from among, for example, Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In embodiments, the sulfide-based solid electrolyte may be an argyrodite-type compound containing at least one selected from among, for example, Li₆PS₅Cl, LisPSsBr, and Li₆PS₅I.

In embodiments, the sulfide-based solid electrolyte may be an argyrodite-type compound containing Li₇₋ₐMₐPS_{6-c}X_{c} (0≤a≤2, (0≤c≤2)). In embodiments, X may be F, Br, Cl, or a combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), or a combination thereof.

The argyrodite-type solid electrolyte may have a density of about 1.5 g/cc to about 2.0 g/cc. The argyrodite-type solid electrolyte, if having a density of about 1.5 g/cc or greater, may allow all-solid-state batteries to have reduced internal resistance (e.g., reduced internal electrical resistance) and prevent solid electrolyte membranes from showing defects such as penetration and short-circuits caused by formation of lithium dendrites (or reduce a likelihood or occurrence of such defects). The solid electrolyte has an elastic modulus of, for example, about 15 GPa to about 35 GPa.

The solid electrolyte layer 300 may further include a binder. The binder included in the solid electrolyte layer 300 may be, for example, styrene butadiene rubber (SBR), polytetrafluoroethylene, polyvinylidene fluoride, and/or polyethylene, but embodiments are not limited thereto. The binder of the solid electrolyte layer 300 may be the same as or different from the binder included in the positive electrode active material layer 120 or the binder included in a negative electrode coating layer 220.

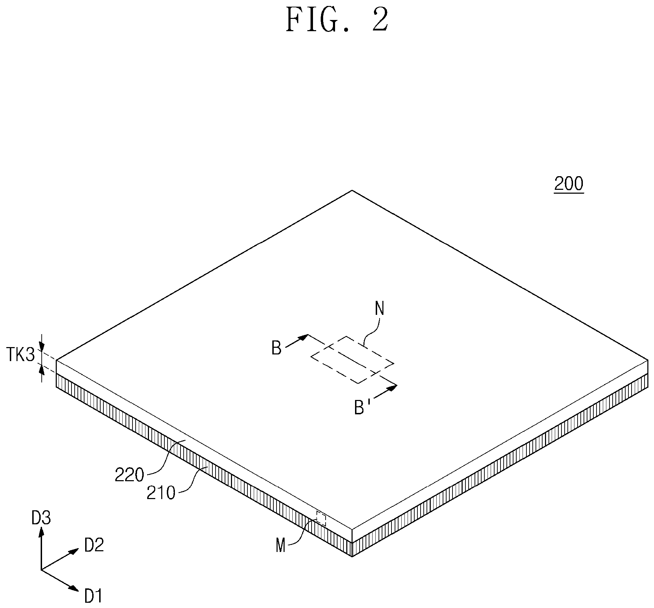

The negative electrode layer 200 will be described in more detail with reference to FIG. 2.

In embodiments, a carbon layer designed to improve adhesion between the negative electrode coating layer 220 and the solid electrolyte layer 300 may be further included.

### Negative Electrode Layer

FIG. 2 is a cross-sectional view showing a negative electrode layer 200 according to embodiments of the present disclosure.

Referring to FIG. 2, the negative electrode layer 200 includes a negative electrode current collector 210 and a negative electrode coating layer 220 on the negative electrode current collector 210.

The negative electrode current collector 210 may provide a reference surface on which the negative electrode coating layer 220 is provided. For example, the negative electrode current collector 210 may include a material that is not reactive with lithium, e.g., does not form either an alloy or a compound with lithium. Materials constituting the negative electrode current collector 210 are, for example, copper (Cu), stainless steel, titanium (Ti), iron (Fe), cobalt (Co), and/or nickel (Ni), but are not necessarily limited thereto, and any suitable material generally used in the art as an electrode current collector may be used. The negative electrode current collector may have a thickness of 1 µm to 20 µm, for example, 5 µm to 15 µm, or, for example, 7 µm to 10 µm.

The negative electrode current collector 210 may be composed of one of the above-described metals, or may include an alloy of two or more metals or a coating material. The negative electrode current collector 210 is, for example, in the form of a plate and/or a foil. In embodiments, the negative electrode current collector 210 may not be provided.

The negative electrode coating layer 220 may allow lithium metal to grow between the negative electrode coating layer 220 and the negative electrode current collector 210 if the all-solid-state battery 10 is charged. In embodiments, the negative electrode coating layer 220 may form an alloy with lithium therein and/or allow lithium metal to grow therein if the all-solid-state battery 10 is charged. The negative electrode coating layer 220 may serve as a protection layer for lithium metal and also inhibit or reduce the deposition and growth of lithium dendrites.

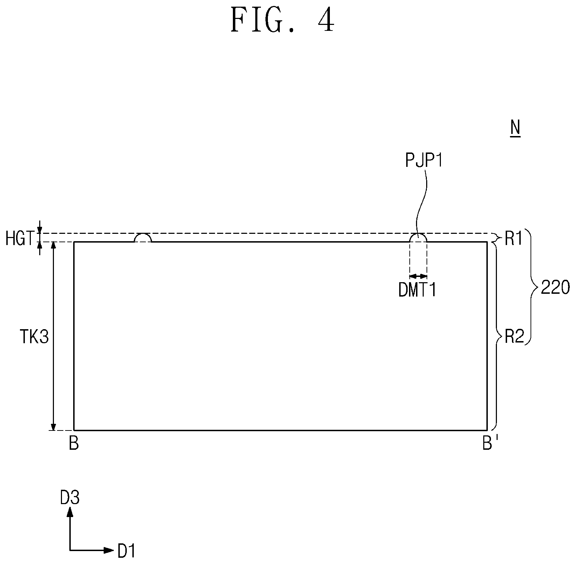

The negative electrode coating layer 220 may have a smaller thickness than the positive electrode active material layer 120. The thickness of the negative electrode coating layer 220, may be, for example, 50% or less, 40% or less, 30% or less, 20% or less, 10% or less, or 5% or less of the thickness of the positive electrode active material layer 120. The negative electrode coating layer 220 may have a thickness TK3 (FIG. 4) of, for example, 1 µm to 20 µm, 5 µm to 20 µm, 5 µm to 10 µm, or 5 µm to 7 µm. The negative electrode coating layer 220 may have a thickness TK3 (FIG. 4) of 10 µm. If the negative electrode coating layer 220 is too thin, the lithium dendrites formed between the negative electrode coating layer 220 and the negative electrode current collector 210 break down the negative electrode coating layer 220, and this may cause a first battery cell CEL1 to have degraded cycle characteristics. If the negative electrode coating layer 220 is too thick, the all-solid-state battery 10 has reduced energy density and greater internal resistance (e.g., greater internal electrical resistance) due to the negative electrode coating layer 220, and this may cause the first battery cell CEL1 to have degraded cycle characteristics.

In embodiments, a carbon layer designed to improve adhesion between the negative electrode coating layer 220 and the solid electrolyte layer 300 may be further included.

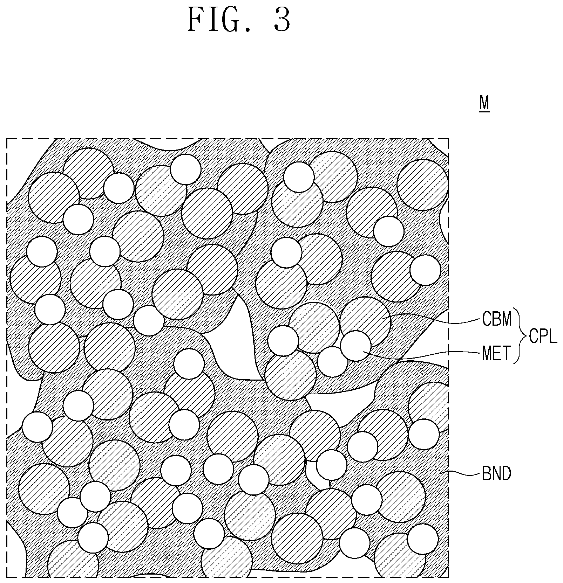

The negative electrode coating layer 220 will be described in more detail with reference to FIGS. 3-5.

### Negative Electrode Coating Layer

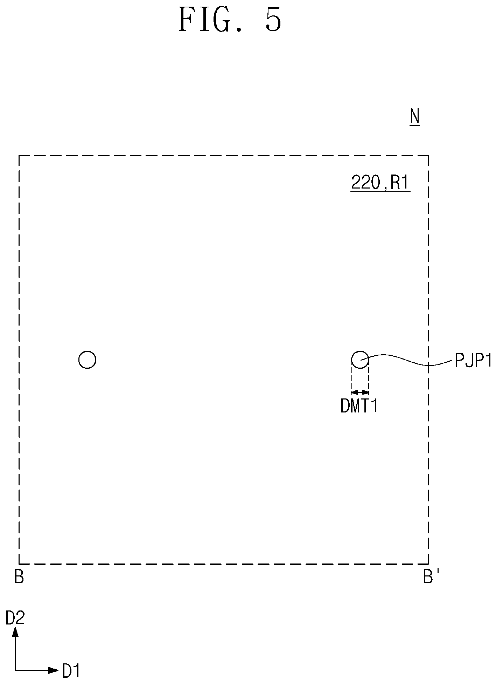

FIGS. 3-5 are views showing the negative electrode coating layer 220. FIG. 3 is an enlarged view showing region M of the negative electrode coating layer 220. FIG. 4 is a cross-sectional view taken along line B-B' of region N of the negative electrode coating layer 220 in FIG. 2. FIG. 5 is a plan view showing region N of the negative electrode coating layer 220 in FIG. 2.

Referring to FIG. 3, the negative electrode coating layer 220 may include a metal-carbon composite CPL. The metal-carbon composite CPL may include a metal MET, a carbon-based material CBM, and sulfur (S).

For example, the metal-carbon composite CPL may include at least one metal MET selected from the group consisting of gold (Au), platinum (Pt), palladium (Pd), silicon (Si), silver (Ag), aluminum (Al), magnesium (Mg), germanium (Ge), copper (Cu), indium (In), nickel (Ni), bismuth (Bi), tin (Sn), and zinc (Zn). For example, the metal may be silver (Ag). The metal MET may improve the electrical conductivity of the negative electrode layer 200. For example, the metal MET may form an alloy with lithium and form a lithium deposition layer on a lower portion of the negative electrode coating layer 220.

The metal MET may be nanoparticles. The metal MET may have an average particle diameter D50 of 30 nm to 60 nm, or 50 nm to 60 nm. If the particle diameter and crystal size of the metal MET satisfy the ranges described above, current density in the negative electrode coating layer 220 may be uniform (or substantially uniform), and all-solid-state batteries including the negative electrode coating layer may have greater lifetime. According to an embodiment, sulfur is chemically bonded to a surface of metal particles.

The metal-carbon composite CPL may contain 3 wt% to 40 wt%, 5 wt% to 40 wt%, 10 wt% to 40 wt%, 12 wt% to 40 wt%, 12 wt% to 20 wt%, or 12 wt% to 15 wt% of the metal MET (metal particles), with respect to a total weight of the metal-carbon composite CPL. If the content of the metal MET satisfies the ranges described above, lithium ions released from a positive electrode active material move toward the negative electrode layer 200 if all-solid-state batteries are charged, and thus a lithium deposition layer may be formed substantially between the negative electrode current collector 210 and the negative electrode coating layer 220.

The carbon-based material CBM may be amorphous carbon, crystalline carbon, or a mixture thereof. For example, the carbon-based material CBM in the metal-carbon composite CPL may include π-π bonding (pi-pi bonding).

The amorphous carbon may include, for example, carbon black, acetylene black, denka black, furnace black, ketjen black, activated carbon, or a combination thereof. The carbon black may include, for example, Super P (Timcal).

The amorphous carbon may be a single particle or an assembly in the form of secondary particles in which primary particles are assembled (e.g., agglomerated). If the amorphous carbon is a single particle, it may be an amorphous carbon particle having a nano size of an average particle diameter D50 of 100 nm or less, for example, 10 nm to 100 nm.

In embodiments, if the amorphous carbon is an assembly, the primary particles may have a particle diameter of 20 nm to 100 nm, and the secondary particles may have a particle diameter of 1 µm to 20 µm.

For example, the primary particle may have a particle diameter of 20 nm or greater, 30 nm or greater, 40 nm or greater, 50 nm or greater, 60 nm or greater, 70 nm or greater, 80 nm or greater, or 90 nm or greater, and 100 nm or less, 90 nm or less, 80 nm or less, 70 nm or less, 60 nm or less, 50 nm or less, 40 nm or less, or 30 nm or less.

For example, the secondary particles may have a particle diameter of 1 µm or greater, 3 µm or greater, 5 µm or greater, 7 µm or greater, 10 µm or greater, or 15 µm or greater, and 20 µm or less, 15 µm or less, 10 µm or less, 7 µm or less, 5 µm or less, or 3 µm or less.

For example, the primary particles may be in the shape of a sphere, an oval, a plate, or a combination thereof. For another example, the primary particles may be in the shape of a sphere, an oval, or a combination thereof.

The crystalline carbon may include, for example, natural graphite, artificial graphite, carbon nanotubes, graphene, or a combination thereof. The crystalline carbon may be amorphous, plate-shaped, flaky, spherical, and/or fibrous.

In an embodiment, the metal-carbon composite CPL may include a mixture of carbon black and silver (Ag).

The metal-carbon composite CPL may contain 60 wt% to 97 wt%, 60 wt% to 95 wt%, 60 wt% to 90 wt%, 60 wt% to 88 wt%, 80 wt% to 88 wt%, or 85 wt% to 88 wt% of the carbon-based material CBM, with respect to a total weight of the metal-carbon composite CPL. If the content of the carbon-based material CBM satisfies the ranges described above, a lithium deposition layer may be formed substantially between the negative electrode current collector 210 and the negative electrode coating layer 220 if all-solid-state batteries are charged.

The metal MET and the carbon-based material CBM in a metal-carbon composite CPL may be chemically bonded through sulfur (S). For example, the metal MET and the carbon-based material CBM in the metal-carbon composite CPL are not simply physically mixed or assembled, but the metal MET and the carbon-based material CBM are chemically bonded. The chemical bond between the metal MET and the carbon-based material CBM may be a chemical bond through sulfur (S). For example, the chemical bond through sulfur (S) may include a covalent bond between a carbon-based material CBM and sulfur (S) and a covalent bond between sulfur (S) and the metal MET. For example, the metal-carbon composite CPL may include a covalent bond between the carbon-based material CBM and sulfur (S) and a covalent bond between sulfur (S) and the metal MET. According to an embodiment, sulfur is chemically bonded to a surface of the metal, respectively metal particles.

The chemical bond through sulfur (S) may be obtained by using a sulfur raw material in the process of preparing the metal-carbon composite CPL.

The chemical bond between the metal MET and the carbon-based material CBM in the metal-carbon composite CPL through sulfur (S) has greater bonding strength than the physical bonding and may effectively prevent the metal MET and the carbon-based material CBM from being separated if preparing the negative electrode coating layer 220 (or may reduce a likelihood, degree, or occurrence of separation of the metal MET and the carbon-based material CBM). In embodiments, the metal MET may be uniformly (or substantially uniformly) dispersed in the metal-carbon composite CPL through sulfur (S) being uniformly (or substantially uniformly) distributed in the carbon-based material CBM.

For example, the chemical bond through sulfur (S) may be determined in a spectrum obtained by X-ray photoelectron spectroscopy (XPS) analysis of the metal-carbon composite CPL.

For example, if the metal MET is silver (Ag), peaks may be present in a binding energy range of 160 eV to 162 eV in the S2p spectrum obtained by XPS analysis. The peaks may correspond to Ag-S bond.

The content of sulfur (S) in the metal-carbon composite CPL is 1,000 ppm to 10,000 ppm, may be 1,000 ppm to 8,000 ppm, 2,000 ppm to 7,000 ppm, or 3,000 ppm to 6,000 ppm. The content of sulfur (S) is defined as a weight of sulfur (S) with respect to a total weight of the metal-carbon composite CPL.

If the content of sulfur (S) satisfies the ranges described above, the metal MET may be evenly (or substantially evenly) dispersed on the carbon-based material CBM. In embodiments, if the content of sulfur (S) satisfies the ranges described above, aggregation of the carbon-based material CBM, side reactions with the metal MET, and aggregation of the metal MET may be prevented (or reduced), and a negative electrode coating layer 220 having a uniform (or substantially uniform) thickness may be provided on the negative electrode current collector 210. Accordingly, lithium is uniformly (or substantially uniformly) deposited between the negative electrode current collector 210 and the negative electrode coating layer 220 if charging all-solid-state batteries, thereby forming a lithium deposition layer having a uniform (or substantially uniform) thickness and increasing the lifetime of all-solid-state batteries.

The negative electrode coating layer 220 may further include other additives in addition to the metal-carbon composite CPL. The negative electrode coating layer 220 may further include at least one additive selected from the group consisting of, for example, a binder BND, a filler, a coating agent, a dispersant, and an ion conductive auxiliary agent.

For example, as the binder BND, an aqueous binder, an organic binder, or a combination thereof may be used. As a binder, for example, polyvinyl alcohol, carboxymethylcellulose, hydroxypropylcellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, nylon or a combination thereof may be used.

For example, the aqueous binder may include styrene butadiene rubber (SBR), carboxymethylcellulose (CMC), or a combination thereof. If using the aqueous binder, water may be used as a solvent.

For example, the organic binder may include polytetrafluoroethylene, polyvinylidene fluoride, and/or the like. If using the organic binder, N-methylpyrrolidone (NMP) and/or the like may be used as a solvent.

The metal-carbon composite CPL may have a compressive conductivity of 20 S/cm or greater. For example, metal-carbon composite CPL may have a compressive conductivity of 20 S/cm to 30 S/cm.

Referring to FIGS. 4-5, the negative electrode coating layer 220 may include a first region R1 and a second region R2. The second region R2 may indicate the remaining region excluding the first region R1.

The first region R1 may include a first protrusion portion PJP1. The first protrusion portion PJP1 may be formed on one surface of the negative electrode coating layer 220. The one surface may be a surface in which the negative electrode coating layer 220 and the solid electrolyte layer 300 are in contact (e.g., physical contact) with each other. Accordingly, the solid electrolyte layer 300 may include a recess portion that is in contact (e.g., physical contact) with the first protrusion portion PJP1.

The first protrusion portion PJP1 may be a convex portion protruding from the one surface of the negative electrode coating layer 220. The first region R1 may be defined as a region from one surface spaced apart from the second region R2 by 0.01 µm in a third direction D3 to one surface in contact (e.g., physical contact) with a highest point of the first protrusion portion PJP1 in the third direction D3. The one surface in contact with the highest point of the first protrusion portion PJP1 in the third direction D3 may be parallel to the one surface spaced apart from the second region R2 by about 0.01 µm in the third direction D3.

A plane of the first protrusion portion PJP1 may have, for example, a circular shape, an oval shape, or an irregular shape. A cross-section of the first protrusion portion PJP1 may have, for example, a semicircular shape, a semioval shape, or an irregular shape. However, embodiments are not limited to the examples described.

A first diameter DMT1 of the first protrusion portion PJP1 may be defined as a length of the first protrusion portion PJP1 in a first direction D1. The length of the first protrusion portion PJP1 in the first direction D1 is the distance from one point of the first protrusion portion PJP1 to another point of the first protrusion portion PJP1, and the one point and the other point of the first protrusion PJP1 may be points in which the first protrusion portion PJP1 is in contact (e.g., physical contact) with one surface spaced apart from the second region R2 by about 0.01 µm in the third direction D3. For example, the diameter DMT1 of the first protrusion portion PJP1 may be obtained by analyzing the surface defined by the first direction D1 and a second direction D2 of the negative electrode coating layer 220 using an optical microscope. In embodiments, the diameter DMT1 of the first protrusion portion PJP1 may be obtained by analyzing an electron micrograph of the negative electrode coating layer 220.

For example, the first diameter DMT1 of the first protrusion portion PJP1 may be about 20 µm or less. For example, the diameter DMT1 of the first protrusion portion PJP1 may be about 0 µm to about 20 µm, about 1 µm to about 20 µm, or about 5 µm to about 15 µm.

A height HGT of the first protrusion portion PJP1 may be defined as a shortest distance from the one surface spaced apart from the second region R2 by about 0.01 µm in the third direction D3 to the one surface in contact (e.g., physical contact) with the highest point of the first protrusion portion PJP1 in the third direction D3. For example, the height HGT of the first protrusion portion PJP1 may be obtained by analyzing an electron micrograph of the negative electrode coating layer 220. For example, the height HGT of the first protrusion portion PJP1 may be obtained by analyzing an electron micrograph of the negative electrode coating layer 220.

For example, the height HGT of the first protrusion portion PJP1 may be about 4 µm or less. For example, the height HGT of the first protrusion portion PJP1 may be about 0 µm to about 4 µm, about 1 µm to about 3 µm, or about 1 µm to about 2 µm.

If the first diameter DMT1 and a height HGT of the first protrusion portion PJP1 satisfy the ranges described above, a negative electrode coating layer 220 having a uniform (or substantially uniform) thickness may be provided on the negative electrode current collector 210, and all-solid-state batteries may have greater lifetime.

The number of the first protrusion portions PJP1 per unit area (e.g., per 100 µm²) of one surface may be about 2 or less. For example, the number of first protrusion portions PJP1 per unit area (e.g., per 100 µm²) of one surface may be about 0 to about 2, or more than about 0 and about 2 or less. In embodiments, the one surface may not substantially include the first protrusion portion PJP1. For example, the number of first protrusion portions PJP1 per unit area (e.g., per 100 µm²) of one surface may indicate the number of first protrusion portions PJP1 observed in a random area (10 µm x 10 µm) selected on a surface (100 µm x 100 µm) of the negative electrode coating layer 220. If the number of first protrusion portions PJP1 per unit area (e.g., per 100 µm²) of one surface satisfies the ranges described above, a negative electrode coating layer 220 having a uniform (or substantially uniform) thickness may be provided on the negative electrode current collector 210, and all-solid-state batteries may have greater lifetime.

The surface of the negative electrode coating layer 220 has a root mean square roughness (Sq) of 0.6 µm or less. For example, the surface of the negative electrode coating layer 220 may have a root mean square roughness (Sq) of 0 µm to 0.6 µm, or 0.01 µm to 0.6 µm. For example, the root mean square roughness (Sq) of the one surface of the negative electrode coating layer 220 may be measured using a laser microscope. The root mean square roughness (Sq) of the one surface of the negative electrode coating layer 220 may indicate an average of the root mean square roughness (Sq) observed in nine random areas (10 µm x 10 µm) selected on a surface (100 µm x 100 µm) of the negative electrode coating layer 220.

The one surface of the negative electrode coating layer 220 may have a maximum height roughness (Sz) of 4 µm or less. For example, the one surface of the negative electrode coating layer 220 may have a maximum height roughness (Sz) of 0 µm to 4 µm, or 0.01 µm to 4 µm. For example, the maximum height roughness (Sz) of the one surface of the negative electrode coating layer 220 may be measured using a laser microscope. The maximum height roughness (Sz) of the one surface of the negative electrode coating layer 220 may indicate an average of the maximum height roughness (Sz) observed in nine random areas (10 µm x 10 µm) selected on a surface (100 µm x 100 µm) of the negative electrode coating layer 220.

If the root mean square roughness (Sq) and the maximum height roughness (Sz) of the one surface of the negative electrode coating layer 220 satisfy the ranges described above, a negative electrode coating layer 220 having a uniform (or substantially uniform) thickness may be provided on the negative electrode current collector 210, and all-solid-state batteries may have greater lifetime.

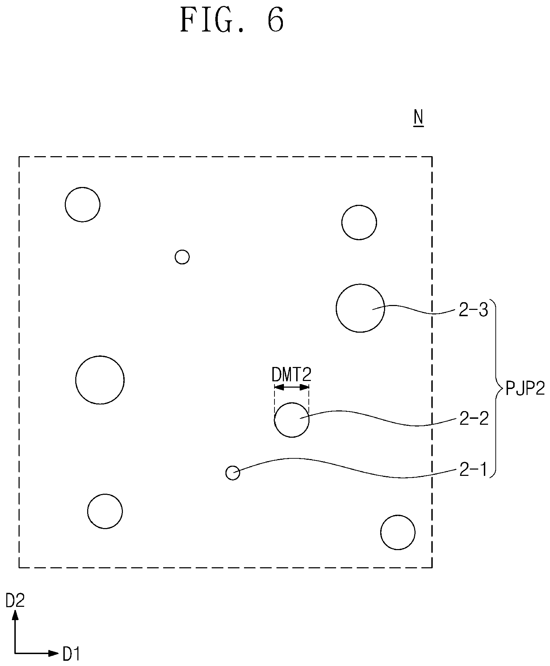

FIG. 6 is a plan view showing region N of a negative electrode coating layer containing a metal-carbon composite according to Comparative Examples of the present disclosure. The content of sulfur (S) in the metal-carbon composite according to Comparative Examples of the present disclosure may be less than 1,000 ppm or greater than 10,000 ppm. Accordingly, the metal may not be uniformly dispersed on a carbon-based material. Agglomeration of carbon-based materials, side reactions with metals, and aggregation of metals may be caused. Accordingly, the thickness of the negative electrode coating layer may not be uniform.

Referring to FIG. 6, the negative electrode coating layer according to Comparative Examples of the present disclosure may include a second protrusion portion PJP2 on one surface thereof. The one surface may be a surface in which a negative electrode coating layer and a solid electrolyte layer are in contact (e.g., physical contact) with each other. For example, the second diameter DMT2 of the second protrusion portion PJP2 may vary. The second protrusion portion PJP2 may include at least one of a (2-1)-th protrusion portion having a diameter of about 20 µm or less, a (2-2)-th protrusion portion having a diameter of about 30 µm to about 70 µm, and a (2-3)-th protrusion portion having a diameter of about 100 µm or greater. The height of the second protrusion portion PJP2 may vary. For example, the number of (2-1)-th protrusion portions per unit area (e.g., per 100 µm²) of the one surface may be greater than two. For example, the number of (2-2)-th protrusion portions per unit area (e.g., per 100 µm²) of the one surface may be greater than 0. For example, the number of the (2-3)-th protrusion portions per unit area (e.g., per 100 µm²) of the one surface may be greater than 0. Accordingly, lithium may be unevenly deposited if all-solid-state batteries are charged, and the all-solid-state batteries may have short lifetime.

The metal-carbon composite CPL according to embodiments of the present disclosure may be prepared through the following method.

A first carbon-containing compound and a sulfur raw material may be mixed. The process may be dry mixing or wet mixing. If the dry mixing process is performed, a sulfur raw material that is solid at room temperature may be used. If the wet mixing process is performed, a sulfur raw material that is liquid at room temperature may be used.

The first carbon-containing compound may include amorphous carbon and/or crystalline carbon.

The sulfur raw material may include a second carbon-containing compound and a functional group. The functional group may include sulfur (S). The sulfur raw material may include a thiol compound, a sulfide-based compound, a thiophene-based compound, sulfonic acid, sulfone, sulfoxide, or a combination thereof. For example, the sulfur raw material may be a thiol compound.

For example, the thiol compound may be mercapto acetic acid, 1-dodecanethiol, 6-mercapto-1-hexanol, 11-mercapto -1-mercapto-1-undecanol, 2-naphthalenethiol, 1,4-benzenedimethanethiol, 4-mercaptobenzoic acid, 1,3-benzenedithiol, or a combination thereof.

For example, the sulfide-based compound may be polyphenylene sulfide, carbon disulfide, metal sulfide, or a combination thereof. In the metal sulfide, the metal may be Ag, Na, Zn, Fe, or a combination thereof.

For example, the thiophene-based compound may be thiophene (C₄H₄S), 2-methylthiophene, thianaphthalene, 4,6-dimethyldibenzothiophene, or a combination thereof.

For example, the sulfonic acid may be p-toluene sulfonic acid, sodium dodecylbenzenesulfonate, taurine, or a combination thereof.

For example, the sulfone may be dimethyl sulfone, 4,4'-dichlorodiphenyl sulfone, or a combination thereof.

For example, the sulfoxide may be dimethyl sulfoxide, methyl phenyl sulfoxide, or a combination thereof.

The first carbon-containing compound and the sulfur raw material may be present at a weight ratio of 4:1 to 999:1. For example, the first carbon-containing compound and the sulfur source material may be present at a weight ratio of 4:1 to 900:1, 5:1 to 100:1, or 5:1 to 20:1.

The mixture may be heat-treated. The heat treatment process may be performed at a temperature of 70 °C to 110 °C. Accordingly, a surface of the first carbon-containing compound may be coated with the sulfur raw material. For example, the first carbon-containing compound and the second carbon-containing compound may form a π-π bond. The first carbon-containing compound and the second carbon-containing compound may constitute a carbon-based material of the metal-carbon composite described above through processes which will be further described elsewhere herein.

A supported product may be prepared by mixing the heat treatment product, a metal compound, a reducing agent, and a solvent. For example, the supporting process may be performed by adding the metal compound and the reducing agent to the heat treatment product and the solvent. For example, the solvent may include water, ethanol, glycerol, benzene, xylene, or a combination thereof. For example, the reducing agent may include NaBH₄, ascorbic acid, trisodium citrate, ethylene glycol, or a combination thereof.

The metal compound may include metal nitride, metal sulfate, metal perchlorate, or a combination thereof. The metal may include at least one selected from the group consisting of gold (Au), platinum (Pt), palladium (Pd), silicon (Si), silver (Ag), aluminum (Al), magnesium (Mg), germanium (Ge), copper (Cu), indium (In), nickel (Ni), bismuth (Bi), tin (Sn), and zinc (Zn). For example, if the metal is silver (Ag), the metal compound may be AgNOs, Ag₂SO₄, AgClO₄, or a combination thereof.

The weight ratio of the heat treatment product and the metal compound may be regulated according to a suitable or desired content of metal in the metal-carbon composite described above. The metal compound may be added such that the content of metal in the metal-carbon composite reaches 3 wt% to 40 wt%, 5 wt% to 40 wt%, 10 wt% to 40 wt%, 12 wt% to 40 wt%, 12 wt% to 20 wt%, or 12 wt% to 15 wt%.

The amount of the reducing agent added may be a suitable or appropriate amount for the reduction reaction of the metal compound to take place, and is not particularly limited. For example, the amount of the reducing agent added may be 10 wt% to 300 wt% with respect to a total weight of the metal compound.

The metal-carbon composite may be prepared by heat treating the supported product. Accordingly, organic substances, solvents, and/or the like may be removed, and the above-described metal-carbon composite may be prepared.

The heat treatment process may be performed at 100 °C to 500 °C. For example, the heat treatment process may be performed at 150 °C to 500 °C, 200 °C to 450 °C, or 200 °C to 400 °C. The heat treatment may be performed in a nitrogen atmosphere, an argon atmosphere, or an atmosphere containing a combination thereof. The heat treatment may be performed for 2 to 20 hours.

Hereinafter, embodiments of the present disclosure will be described in more detail through Examples. However, the Examples are only illustrations for describing embodiments of the present disclosure, and the scope of the present disclosure is not limited to the Examples below.

### Example 1

A metal-carbon composite containing silver (Ag) and a carbon-based material and having the two chemically bonded through sulfur (S) was prepared. The content of sulfur (S) ions measured by ion analysis was 3,445 ppm. The metal-carbon composite was prepared as follows.

Carbon black and 2-naphthalene thiol powder were mixed. The mixture was heat-treated at a temperature of 70 °C to 110°C. The heat treated product, AgNOs, a NaBH₄ reducing agent, and water were mixed to prepare a supported product. The supported product was heat-treated at a temperature of 100 °C to 500 °C in a nitrogen atmosphere to prepare a metal-carbon composite.

### Example 2

A metal-carbon composite was prepared in substantially the same manner as in Example 1, except that the content of sulfur (S) was 4,708 ppm.

### Example 3

A metal-carbon composite was prepared in substantially the same manner as in Example 1, except that the content of sulfur (S) was 5,851 ppm.

### Comparative Example 1

A metal-carbon composite was prepared in substantially the same manner as in Example 1, except that the content of sulfur (S) was 843 ppm.

### Comparative Example 2

A metal-carbon composite was prepared in substantially the same manner as in Example 1, except that the content of sulfur (S) was 10,272 ppm.

### Comparative Example 3

A metal-carbon composite was prepared in substantially the same manner as in Example 1, except that the content of sulfur (S) was 22,543 ppm.

### Preparation of Negative Electrode Layer

The metal-carbon composite, styrene butadiene rubber, and sodium carboxymethyl cellulose were mixed in a water solvent at a weight ratio of 100:6:3 to prepare a slurry.

The prepared slurry was applied onto a stainless steel foil current collector having a thickness of 10 µm and then vacuum dried at 80 °C. The negative electrode coating layer had a thickness of 10 µm.

### Preparation of Solid Electrolyte Layer

Argyrodite-type solid electrolyte Li₆PS₅Cl and an isobutyryl isobutylate binder solution were mixed. The binder solution was one to which an acrylate-based polymer (butyl acrylate) was added (solid content: 50 wt%). The mixing ratio of the solid electrolyte and the binder was a weight ratio of 98.7:1.3.

The mixing process was performed using a Thinky mixer. A 2 mm zirconia ball was added to the obtained mixture and the mixture was stirred again using the Thinky mixer to prepare a slurry. The slurry was cast onto a release polytetrafluoroethylene film and dried at room temperature to prepare a solid electrolyte layer having a thickness of 100 µm.

### Preparation of Positive Electrode Layer

A mixture in which a LZO (Li-doped zinc oxide) coated positive electrode active material (LiNi_{0.9}Mn_{0.05}Co_{0.05}O₂), argyrodite-type solid electrolyte Li₆PS₅Cl, a conductive material (carbon nanofiber), and a binder (polytetrafluoroethylene) were mixed at a weight ratio of 85:15:3:1.5 was prepared.

The prepared mixture was applied onto an aluminum foil current collector having a thickness of 10 µm and then vacuum dried at 45 °C to prepare a positive electrode layer. The positive electrode active material layer had a thickness of 160 µm.

### Preparation of All-Solid-State Battery

The negative electrode layer, the solid electrolyte layer, and the positive electrode layer were sequentially stacked and subjected to a pressure of 4 Nm to prepare an all-solid-state battery.

### Evaluation Example 1: Analysis of Metal-Carbon Composite

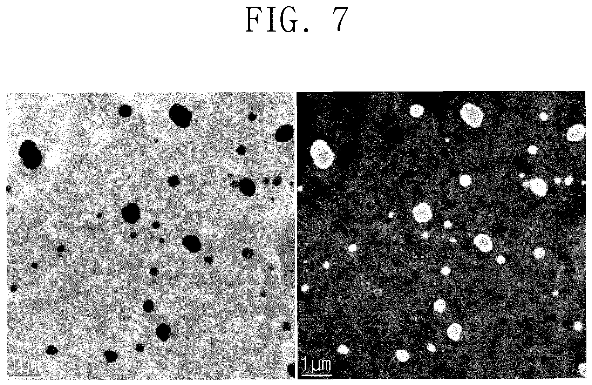

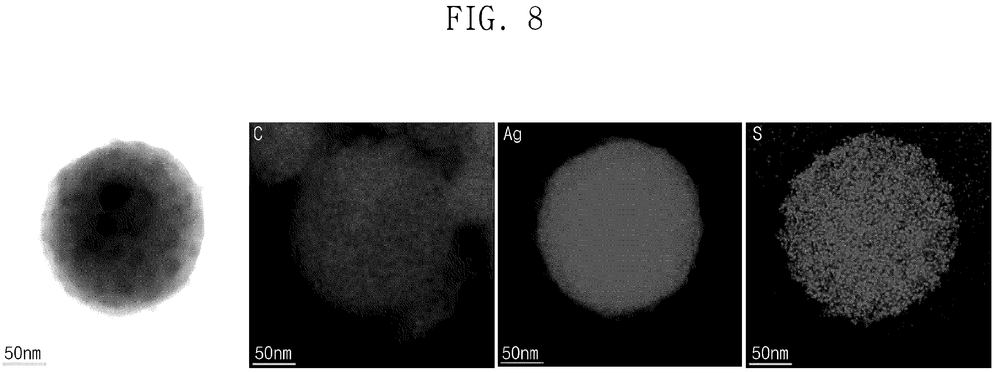

The components and compositions of the metal-carbon composites of Examples 1 to 3 and Comparative Examples 1 to 3 were analyzed. The content of sulfur (S) was calculated based on the educt contents of the preparation process. The crystal size of silver (Ag) was analyzed using XRD. The content of silver (Ag) was analyzed using transmission electron microscopy (TEM) and energy dispersive X-ray spectroscopy (EDS). The results are shown in FIGS. 7-8, and Table 1. FIGS. 7-8 are sets of images showing the metal-carbon composite of Example 1 subjected to transmission electron microscopy (TEM) and energy dispersive X-ray spectroscopy (EDS).

**Table 1**

| Item | Content of sulfur (ppm) | Crystal size of silver (nm) | Content of silver (wt%) | Compressive conductivity (S/cm) |
|---|---|---|---|---|
| Example 1 | 3,445 | 51.2 | 13 | 24 |
| Example 2 | 4,708 | 57.3 | 15 | 26 |
| Example 3 | 5,851 | 51.3 | 14 | 25 |
| Comparative Example 1 | 843 | 51.5 | 5 | 28 |
| Comparative Example 2 | 10,272 | 56.4 | 15 | 13 |
| Comparative Example 3 | 22,543 | 56.5 | 14 | 10 |

Referring to FIGS. 7-8, and Table 1, carbon (C), silver (Ag), and sulfur (S) were detected in the metal-carbon composites of Examples 1 to 3. In addition, it was determined that Examples 1 to 3 had excellent compressive conductivity.

### Evaluation Example 2: Analysis of Surface of Negative Electrode Coating Layer (1)

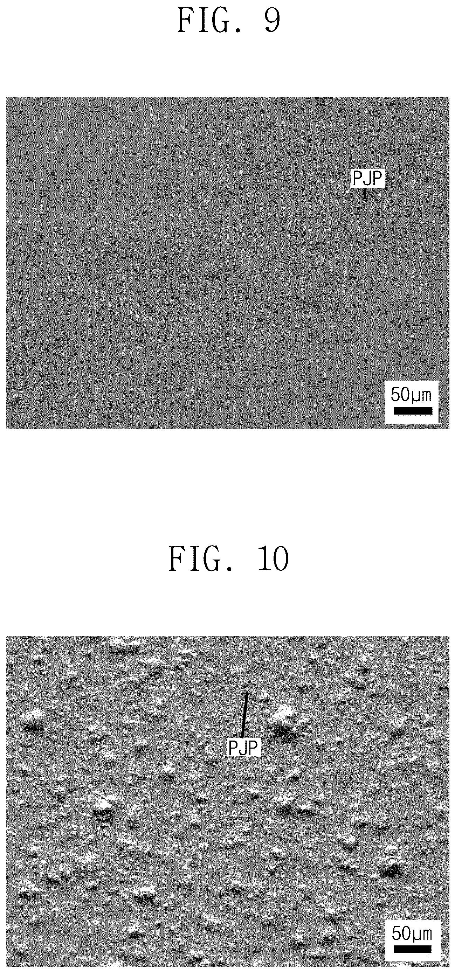

Surfaces of the negative electrode coating layers containing the metal-carbon composites according to Examples 1 to 3 and Comparative Examples 1 to 3 were analyzed. Surface analysis was performed using an optical microscope. The surface analysis was performed by magnifying the surfaces of the negative electrode coating layers 500 times and measuring the diameters of observed protrusion portions. The results are shown in FIGS. 9-12.

The coating properties of each negative electrode coating layer prepared using the metal-carbon composites were evaluated according to the diameter of the protrusion portion, and the results are shown in Table 2. If only protrusion portions having a diameter of 20 µm or less were included, the coating properties were evaluated as good. If protrusion portions having a diameter of 30 µm to 70 µm were included, the coating properties were evaluated as bad. If protrusion portions having a diameter of 100 µm or greater were included, the coating properties were evaluated as worst.

**Table 2**

| Item | Coating properties |
|---|---|
| Example 1 | Good |
| Example 2 | Good |
| Example 3 | Good |
| Comparative Example 1 | Bad |
| Comparative Example 2 | Worst |
| Comparative Example 3 | Worst |

Referring to FIG. 9, a protrusion portion having a diameter of about 10 µm was observed on one surface of the negative electrode coating layer containing the metal-carbon composite according to Example 1. The one surface included one protrusion portion per 100 µm².

Referring to FIG. 10, a protrusion portion having a diameter of about 60 µm was observed on one surface of the negative electrode coating layer containing the metal-carbon composite according to Comparative Example 1.

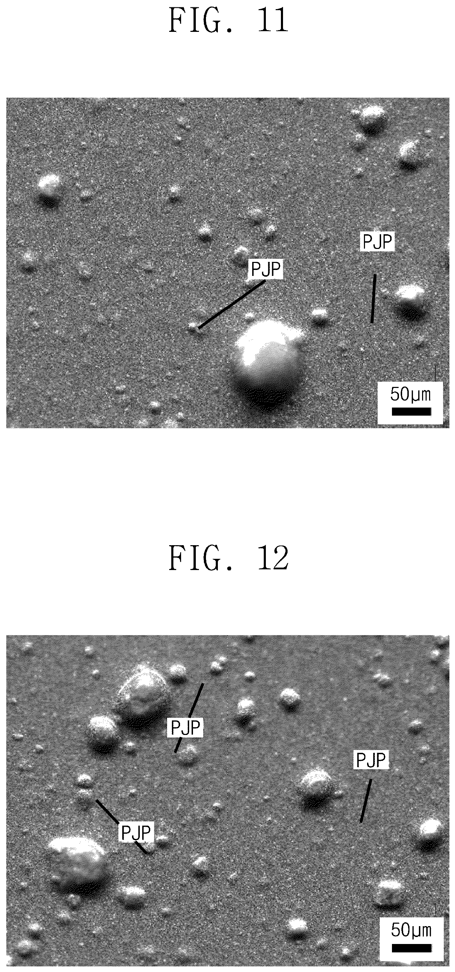

Referring to FIGS. 11-12, protrusion portions having a diameter of 100 µm or greater were observed on one side of the negative electrode coating layers containing the metal-carbon composites according to Comparative Examples 2 and 3.

It was determined that Examples 1 to 3 had negative electrode coating layers having a uniform thickness and excellent coating properties compared to Comparative Examples 1 to 3.

### Evaluation Example 3: Analysis of Surface of Negative Electrode Coating Layer (2)

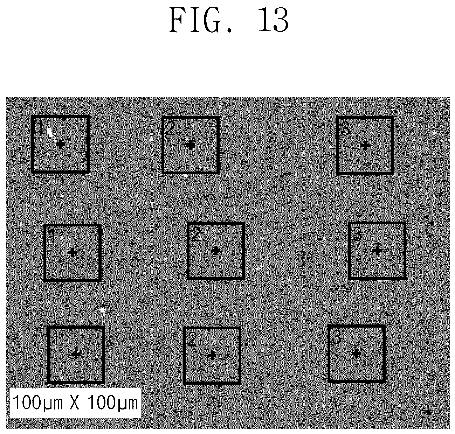

Roughness of the surfaces of the negative electrode coating layers containing the metal-carbon composites according to Example 1, Comparative Example 1, and Comparative Example 2 was analyzed. The roughness was measured for the surface of the negative electrode coating layer, using a laser microscope OLS4100 (LEXT OLS 4100) from Olympus in accordance with ISO-25178-2:2012. The surfaces of the negative electrode coating layers containing the metal-carbon composites according to Example 1 and Comparative Examples 1 and 2 were enlarged 20 times. Nine random regions (10 µm x 10 µm) on the 100 µm x 100 µm surface of each negative electrode coating layer 220 were selected (see FIG. 13), and the average of the root mean square roughness (Sq) and the average of the maximum height roughness (Sz) observed in the above regions are shown in Table 3.

**Table 3**

| Item | Sq (µm) | Sz (µm) |
|---|---|---|
| Example 1 | 0.53 | 3.87 |
| Comparative Example 1 | 0.75 | 4.53 |
| Comparative Example 2 | 1.10 | 5.76 |

It was determined that Example 1 had lower root mean square roughness (Sq) and lower maximum height roughness (Sz) than Comparative Examples 1 and 2.

### Evaluation Example 4: Analysis of Life of All-Solid-State Batteries

Lifetimes of all-solid-state batteries containing the metal-carbon composites according to Examples 1 to 3 and Comparative Examples 1 to 3 were evaluated. The lifetime evaluation was performed by placing the all-solid-state batteries in a constant temperature bath at 60 °C. The batteries were charged at a constant current of 0.1 C for 10 hours until battery voltage reached 4.25 V, and then discharged at a constant current of 0.05 C for 20 hours until battery voltage reached 2.5 V (first cycle). Subsequently, the batteries were charged at a constant current of 0.1 C for 10 hours until battery voltage reached 4.25 V, and then discharged at a constant current of 0.33 C for 3 hours until battery voltage reached 2.5 V (second cycle). Thereafter, the batteries were charged at a constant current of 0.1 C for 10 hours until battery voltage reached 4.25 V. Subsequently, the batteries were discharged at a constant current of 0.5 C for 2 hours until battery voltage reached 2.5 V (third cycle). Thereafter, the batteries were charged at a constant current of 0.1 C for 10 hours until battery voltage reached 4.25 V. Subsequently, the batteries were discharged at a constant current of 1 C for 1 hour until battery voltage reached 2.5 V (fourth cycle). Thereafter, the batteries were charged at a constant current of 0.33 C for 3 hours until battery voltage reached 4.25 V. Subsequently, the batteries were discharged at a constant current of 0.33 C for 3 hours until battery voltage reached 2.5 V (fifth cycle). The above cycle was repeated a total of 50 times to evaluate capacity retention according to the number of cycles. Capacity retention (%) = (discharge capacity after each cycle/discharge capacity of first cycle) x 100

If the capacity retention (%) was 98% or greater, the lifetime characteristics were evaluated as good. If the capacity retention (%) was less than 98%, the lifetime characteristics were evaluated as bad. The results are shown in Table 4.

**Table 4**

| Item | Lifetime characteristics |
|---|---|
| Example 1 | Good |
| Example 2 | Good |
| Example 3 | Good |
| Comparative Example 1 | Bad |
| Comparative Example 2 | Bad |
| Comparative Example 3 | Bad |

The all-solid-state batteries according to Examples 1 to 3 were superior to the all-solid-state batteries according to Comparative Examples 1 to 3 in lifetime characteristics.

A negative electrode coating layer according to an embodiment of the present disclosure may have a uniform (or substantially uniform) thickness.

An all-solid-state battery according to an embodiment of the present disclosure may have excellent lifetime characteristics.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

## Claims

1. A negative electrode coating layer (220) for an all-solid-state battery (10), comprising:
a metal-carbon composite (CPL) in which a metal (MET) and a carbon-based material (CBM) are chemically bonded through sulfur,
wherein a content of sulfur is 1,000 ppm to 10,000 ppm based on a total weight of the metal-carbon composite, and
a root mean square roughness (Sq) of a surface of the negative electrode coating layer (220) is 0.6 µm or less measured in accordance with ISO-25178-2:2021.

2. The negative electrode coating layer (220) as claimed in claim 1, wherein the metal-carbon composite comprises a covalent bond between the carbon-based material and the sulfur and a covalent bond between the sulfur and the metal.

3. The negative electrode coating layer (220) as claimed in claim 1 or 2, wherein the metal-carbon composite contains 12 wt% to 40 wt% of the metal, with respect to a total weight of the metal-carbon composite.

4. The negative electrode coating layer (220) as claimed in any one of the preceding claims, wherein the metal is at least one selected from the group consisting of gold (Au), platinum (Pt), palladium (Pd), silicon (Si), silver (Ag), aluminum (Al), magnesium (Mg), germanium (Ge), copper (Cu), indium (In), nickel (Ni), bismuth (Bi), tin (Sn), and zinc (Zn).

5. The negative electrode coating layer (220) as claimed in claim 4, wherein the metal is silver (Ag).

6. The negative electrode coating layer (220) as claimed in any one of the preceding claims, wherein the metal is present in form of metal particles and the metal particles have an average diameter (D50) of 30 nm to 60 nm measured by a laser diffraction method.

7. The negative electrode coating layer (220) as claimed in claim 6, wherein sulfur is chemically bonded to a surface of metal particles.

8. The negative electrode coating layer (220) as claimed in any one of the preceding claims, wherein the carbon-based material is amorphous carbon, crystalline carbon, or a mixture thereof.

9. The negative electrode coating layer (220) as claimed in any one of the preceding claims, further comprising a binder,
wherein the binder is an aqueous binder, an organic binder, or a combination thereof.

10. The negative electrode coating layer (220 as claimed in any one of the preceding claims, wherein a maximum height roughness (Sz) of the one surface is 4 µm or less measured in accordance with ISO-25178-2:2021.

11. The negative electrode coating layer (220) as claimed in any one of the preceding claims, wherein the negative electrode coating layer has a thickness of 5 µm to 20 µm.

12. The negative electrode coating layer (220) as claimed in any one of the preceding claims, wherein the metal-carbon composite has a compressive conductivity of 20 S/cm or greater.

13. An all-solid-state battery (10) comprising:
a positive electrode layer (100);
a negative electrode layer (200); and
a solid electrolyte layer (300) between the positive electrode layer (100) and the negative electrode layer (200),
wherein the negative electrode layer (200) comprises a negative electrode current collector (210) and a negative electrode coating layer (220) as claims in any one of the preceding claims.

14. The all-solid-state battery as claimed in claim 13, wherein the one surface of the negative electrode coating layer comprises a protrusion portion having a diameter of 20 µm or less,
a number of protrusion portions per /100 µm² of the one surface is greater than 0 and 2 or less, and
the solid electrolyte layer comprises a recess portion in contact with the protrusion portion.
